Europäisches Patentamt

European Patent Office

Office européen des brevets

(11) Veröffentlichungsnummer: **0 217 388 B1**

(19)

(12) # EUROPÄISCHE PATENTSCHRIFT

(45) Veröffentlichungstag der Patentschrift: **11.09.91**

(51) Int. Cl.⁵: **B32B 27/32**, B65D 75/10

(21) Anmeldenummer: **86113545.7**

(22) Anmeldetag: **01.10.86**

(54) Transparente Polypropylenfolie für den Bonbondreheinschlag.

(30) Priorität: **04.10.85 DE 3535472**

(43) Veröffentlichungstag der Anmeldung:
**08.04.87 Patentblatt 87/15**

(45) Bekanntmachung des Hinweises auf die
Patenterteilung:
**11.09.91 Patentblatt 91/37**

(84) Benannte Vertragsstaaten:
**BE DE ES FR GB IT NL**

(56) Entgegenhaltungen:
**EP-A- 0 114 312**
**GB-A- 2 028 168**
**GB-A- 2 055 688**
**US-A- 4 230 767**

(73) Patentinhaber: **HOECHST AKTIENGESELL-
SCHAFT**
**Postfach 80 03 20**
**W-6230 Frankfurt am Main 80(DE)**

(72) Erfinder: **Crass, Günther**
**Bachstrasse 7**
**W-6204 Taunusstein 4(DE)**
Erfinder: **Bothe, Lothar, Dr.**
**Am Heiligenhaus 9**
**W-6500 Mainz-Gonsenheim(DE)**

EP 0 217 388 B1

## Beschreibung

Die Erfindung betrifft eine durch Coextrusion hergestellte einseitig oder beidseitig beschichtete transparente Polypropylenfolie für den Bonbondreheinschlag.

Eine besondere Art des Verschlusses von Volleinschlägen zum Zwecke der Verpackung von Verpackungsgütern ist das Drehen oder Wrappen. Bekannt ist dieses Verfahren der Verpackung insbesondere beim Volleinschlag kleinerer Verpackungsgüter, wobei insbesondere bevorzugt runde oder annähernd runde Gegenstände wie Bonbons, Flaschen, Kerzen, Dropsrollen, Schokoladen- und Marzipanriegel oder ähnliches häufig auf diese Art verpackt werden.

Voraussetzung für die Anwendung des Drehens ist die Eignung der Folie, die an den Drehstellen nicht ein- oder abreißen darf, andererseits aber so steif sein muß, daß beim Drehvorgang kein Schrumpfen oder Krumpeln auftritt. Nach dem Stand der Technik wird für Bonboneinschläge vorwiegend Zellglas, also regenerierte Zellulose nicht orientiertes Polypropylen oder PVC-Folie verwendet, siehe "Verpacken mit Kunststoffen" von Günther Kühne, herausgegeben 1974, Carl-Hanser-Verlag, München, Seite 63.

Die GB-A-2,055,688 beschreibt eine siegelfähige Folie, die insbesondere für die möglichst dicht schließende Umhüllung von Verpackungen mit guter Siegelfestigkeit geeignet ist. Ein Hinweis auf eine Folie mit einem hohen Elastizitätsmodul der Basisschicht ist dieser Schrift jedoch nicht zu entnehmen.

Die US-A-4,230,767 beschreibt ebenfalls eine siegelfähige Folie, die aus einer Polypropylen-Basisschicht und mindestens einer Deckschicht aus einem PolymerBlend besteht, wobei das Polymer-Blend aus einem Ethylen/Propylen-Copolymeren und einem zweiten Copolymeren besteht, welches durch Copolymerisation von Buten mit einem weiteren polymerisierbaren Monomeren erhalten wurde. Ein Hinweis auf eine Folie mit einem hohen Elastizitätsmodul der Basisschicht ist dieser Schrift jedoch nicht zu entnehmen.

In der EP-A-0 114 312 wird eine siegelbare, transparente polyolefinische Mehrschichtfolie beschrieben, deren Basisschicht aus einem Polypropylenpolymeren besteht und deren Deckschichten ein Propylencopolymer, ein niedermolekulares Harz, ein Polypropylenhomopolymer und ein Polyorganosiloxan enthalten. Auch hier findet sich kein Hinweis auf eine Folie, deren Basisschicht ein hohen Elastizitätsmodul aufweist.

Im Rahmen der Weiterentwicklung der bekannten Verpackungsfolien bestand für die vorliegende Erfindung die Aufgabe, eine transparente Folie speziell für den Dreheinschlag von kleinen Verpackungsgütern, insbesondere von Bonbons, zu schaffen, die preiswerter und damit wirtschaftlicher herstellbar ist, die aber dennoch nach dem seitlichen Eindrehen (Verzwirbeln) in der eingedrehten (verzwirbelten) Form eine so große Stabilität (Steifigkeit) aufweist, daß der Verpackungsinhalt bei Transport und Lagerung nicht durch selbsttätiges Aufdrehen der Folie aus der Verpackung herausgelöst wird.

Gelöst wird diese Aufgabe durch eine Folie der eingangs genannten Gattung, deren kennzeichnende Merkmale darin zu sehen sind, daß die Basisschicht aus Polypropylen zusätzlich ein niedrigmolekulares Kohlenwasserstoffharz enthält in einer Menge von 10 bis 40 Gew.-%, bezogen auf das Gesamtgewicht von Polypropylen und Harz, daß die Basisschicht einen E-Modul von wenigstens 3 000 N/mm$^2$ aufweist, gemessen in beiden Richtungen der molekularen Orientierung, und daß die Deckschicht, bzw. die Deckschichten, ein Polydialkylsiloxan in einer Menge von 0,3 bis 1,5 Gew.-%, bezogen auf das Gewicht der Deckschicht(en), enthält.

Als bevorzugtes Polypropylen der Basisschicht wird im Rahmen der vorliegenden Erfindung ein isotaktisches Propylenhomopolymeres eingesetzt oder ein Copolymeres, das zum überwiegenden Anteil aus Propyleneinheiten zusammengesetzt ist. Solche Polymeren besitzen üblicherweise einen Schmelzpunkt von mindestens 140°C, bevorzugt von mindestens 150°C. Isotaktisches Polypropylen mit einem n-heptanlöslichen Anteil von weniger als 15 Gew.-%, Copolymere von Ethylen und Propylen mit einem Ethylengehalt von weniger als 10 Gew.-% und Copolymere von Propylen mit anderen Alphaolefinen mit 4 bis 8 Kohlenstoffatomen und mit einem Gehalt dieser Alphaolefine von weniger als 10 Gew.-% stellen typische Beispiele für das bevorzugte thermoplastische Polypropylen der Basisschicht dar.

Die bevorzugten thermoplastischen Polymeren haben zweckmäßigerweise einen Schmelzflußindex im Bereich von 0,5 g/10 min bis 8 g/10 min bei 230°C und 2,16 kp Belastung (DIN 53 735), insbesondere von 1,5 g/10 min bis 4 g/10 min.

Bei dem in der Basisschicht enthaltenen niedrigmolekularen Harz handelt es sich vorzugsweise um ein natürliches oder synthetisches Harz mit einem Erweichungspunkt von 60 bis 180°C, vorzugsweise 80 bis 130°C (bestimmt nach DIN 1995-U 4). Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Enzyklopädie der Techn. Chemie, 4. Auflage, Band 2, Seiten 539 bis 553, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie α-Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d.h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind α-Pinen, β-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomerer oder durch Reaktion des polymerisierten Produktes, wobei insbesondere Hydrierungen oder Teilhydrierungen vorgenommen werden. Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils 60 bis 180°C, vorzugsweise 80 bis 130°C, eingesetzt (bei den ungesättigten Polymerisaten ist das hydrierte Produkt bevorzugt).

Die wirksame Menge an niedermolekularem Harz beträgt 10 bis 40 Gew.-%, vorzugsweise 20 bis 30 Gew.-%, bezogen auf das Gesamtgewicht von Polypropylen und Harz.

Durch den Zusatz an niedermolekularen Harzen der im vorstehenden beschriebenen Art wird insbesondere der Elastizitätsmodul der Basisschicht beeinflußt. Der Elastizitätsmodul soll insbesondere im Bereich von 3 000 bis 4 500 N/mm² liegen. Er wird bestimmt nach DIN 53 457.

Wenn der Elastizitätsmodul der Basisschicht in dem genannten Bereich liegt, hat die Folie die für den bestimmungsgemäßen Einsatzzweck günstigen Stabilitätseigenschaften in eingedrehter (verzwirbelter) Form.

Die ein- oder beidseitig auf die Basisfolie aus Polypropylen aufgebrachten Deckschichten können sowohl heiß- als auch kaltsiegelfähige Schichten sein. Es kann sich auch um nicht siegelbare Schichten handeln. Alle diese Schichten können ein- oder beidseitig vorliegen. Die Heißsiegelschicht besteht vorzugsweise aus einem Ethylen-Homopolymerisat (Polyethylen hoher Dichte oder Polyethylen niedriger Dichte), einem Copolymerisat aus Propylen als Hauptkomponente und Ethylen, vorzugsweise in einer Menge von maximal 10 Gew.-% (bezogen auf das Copolymerisat), einem Copolymerisat aus Propylen als Hauptkomponente und Buten-(1), vorzugsweise in einer Menge von 10 bis 15 Gew.-% (bezogen auf das Copolymerisat), einem Terpolymerisat aus Propylen, Ethylen und einem Alphaolefin mit 4 bis 10 Kohlenstoffatomen, vorzugsweise einem solchen aus 93,2 bis 99,0 Gew.-% Propylen, 0,5 bis 1,9 Gew.-% Ethylen und 0,5 bis 4,9 Gew.-% eines Alphaolefins mit 4 bis 10 Kohlenstoffatomen, oder aus einer Mischung dieser Polymeren. Die Comonomeren sind in den Polymerisaten im wesentlichen statistisch verteilt.

Die Deckschicht bzw. die Deckschichten können auch wie die Basisschicht aus einem Propylenhomopolymeren bestehen, wobei der Schmelzindex des für die Deckschicht eingesetzten Polymeren einen bevorzugt um 0,5 bis 1,0 g/10 min höheren Wert aufweisen soll als der Schmelzindex des für die Basisschicht eingesetzten Polymeren. Geeignete Kaltsiegelschichten bestehen aus Polymerisaten auf der Basis von natürlichem oder synthetischem Kautschuk. Das der Deckschicht/den Deckschichten als Additiv zugesetzte Polydialkylsiloxan ist vorzugsweise ein Polydialkylsiloxan, das 1 bis 4 Kohlenstoffatome in der Alkylgruppe enthält, wobei Polydimethylsiloxan besonders bevorzugt ist. Das Polydialkylsiloxan hat vorzugsweise eine kinematische Viskosität von 1 000 bis 100 000 mm²/s bei 25°C, insbesondere von 5 000 bis 50 000 mm²/s bei 25°C. Die Einsatzmenge des Polydialkylsiloxans in der Deckschicht bzw. den Deckschichten beträgt 0,3 bis 1,5 Gew.-%, vorzugsweise 0,5 bis 1 Gew.-%, bezogen auf das Gewicht der Deckschichten.

Die Dicke der erfindungsgemäßen Folie beträgt vorzugsweise 15 bis 40 μm, insbesondere 20 bis 30 μm, wobei die Dicke der Deckschicht(en) vorzugsweise 0,2 bis 4 μm, insbesondere 0,5 bis 3 μm, bezogen auf die jeweilige Deckschicht beträgt.

Um bestimmte Eigenschaften der erfindungsgemäßen Folie noch weiter zu verbessern, können sowohl die Basisschicht als auch die Deckschicht(en) entsprechende Zusätze in einer jeweils wirksamen Menge enthalten, vorzugsweise seien Antistatika, Stabilisatoren und Nukleierungsmittel genannt. Insbesondere zur Verbesserung der Konfektionierbarkeit kann der Deckschicht bzw. den Deckschichten 0,1 bis 1 Gew.-%, insbesondere 0,2 bis 0,5 Gew.-%, eines organischen oder anorganischen Antiblockmittels zugesetzt werden. Geeignete Antiblockmittel sind beispielsweise unverträgliche organische Polymerisate wie Polya-

3

mid, Polyester, Polycarbonate und dergleichen oder anorganische Substanzen wie Siliciumdioxid und Silikate, insbesondere eignet sich Aluminiumsilikat.

Im folgenden soll die Erfindung anhand von Beispielen noch näher erläutert werden.

Beispiel 1

Es wurde durch Coextrusion und anschließende Streckorientierung und Hitzefixierung eine dreischichtige transparente Folie mit einer Gesamtdicke von 25 $\mu$m hergestellt. Die Deckschichten hatten eine Dicke von jeweils 0,8 $\mu$m.

Die Basisschicht bestand aus Polypropylen mit einem Zusatz von 25 Gew.-% Arkon P® 125, bezogen auf das Gesamtgewicht der Mischung. Die Schmelzviskosität des eingesetzten Polypropylens betrug 3,5 g/10 min bestimmt nach DIN 53 735 bei 2,16 kg Belastung.

Die Deckschichten bestanden ebenfalls aus Polypropylen, welchem eine Menge von 0,75 Gew.-% Polydimethylsiloxan, bezogen auf das Gesamtgewicht der Mischung, zugesetzt war. Das Polydimethylsiloxan hatte eine kinematische Viskosität von 30 000 mm²/sec, das Polypropylen der Deckschichten hatte eine Schmelzviskosität von 4 g/10 min, gemessen nach DIN 53 735 bei 2,16 kg Belastung.

Vergleichsbeispiel 1

Es wurde eine Folie hergestellt wie in Beispiel 1, jedoch ohne den Zusatz von Harz zur Basisschicht und ohne den Zusatz von Polydimethylsiloxan zu den Deckschichten. Die Dicke der Folie betrug ebenfalls 25 $\mu$m.

Vergleichsbeispiel 2

Es wurde eine Folie hergestellt wie in Beispiel 1, jedoch ohne den Zusatz von Harz zu der Basisschicht, die Gesamtdicke der Folie aus Basisschicht und den beiden Deckschichten betrug 25 $\mu$m.

Vergleichsbeispiel 3

Es wurde eine Folie hergestellt wie in Beispiel 1, jedoch ohne den Zusatz von Polydimethylsiloxan zu den Deckschichten. Die Foliendicke betrug ebenfalls 25 $\mu$m.

Vergleichsbeispiel 4

Es wurde eine einschichtige Folie hergestellt aus Polypropylen mit einem Zusatz von 25 Gew.-% Arkon P® 125, bezogen auf das Gesamtgewicht der Mischung. Die Dicke der einschichtigen Folie betrug 25 $\mu$m.

Auswertung:

Das Verarbeitungsverhalten der hergestellten Folien wurde auf Bonboneinwickelmaschinen beurteilt. Es wurden eine langsame Einwickelmaschine (500 Takte/min, Fa. Hänsel) und eine schnelle Einwickelmaschine (1 200 Takte/min, Fa. Nagema) eingesetzt.

Als Einschlageigenschaften wurde das eigenständige Aufdrehen der eingewickelten Bonbons, das Auswickelverhalten beim Auspacken der Bonbons sowie der Füllgrad gleich großer Bonbonbeutel beurteilt.

Die festgestellten Eigenschaften wurden wie folgt bewertet:

+ + = sehr gut, +- = mäßig, -- = schlecht

4

Tabelle

| | E-Modul (N/mm²) | | Verarbeitungsverhalten beim Dreheinschlag | | Güte des Dreheinschlags | | Packung | |
|---|---|---|---|---|---|---|---|---|
| | längs | quer | 500 Takte/min | 1 200 Takte/min | bez. Zwirbel | bez. Öffnen | Füllvorgang | Füllgrad |
| Beispiel 1 | 3 500 | 4 500 | ++ | ++ | ++ | ++ | problemlos | maximal |
| Vergleichsbeisp. 1 | 2 200 | 3 800 | -- | -- | - | -- | gestört | minimal |
| Vergleichsbeisp. 2 | 2 200 | 3 600 | -- | -- | - | - | gestört | gering |
| Vergleichsbeisp. 3 | 3 600 | 4 500 | ++ | ++ | ++ | ++ | Haufen-bildung | hoch |
| Vergleichsbeisp. 4 | 3 650 | 4 600 | ++ | ++ | ++ | ++ | Haufen-bildung | hoch |

## Patentansprüche

1. Durch Coextrusion hergestellte einseitig oder beidseitig beschichtete transparente Polypropylenfolie für den Bonbondreheinschlag, dadurch gekennzeichnet, daß die Basisschicht aus Polypropylen zusätzlich ein niedrigmolekulares Kohlenwasserstoffharz enthält in einer Menge von 10 bis 40 Gew.-%, bezogen auf das Gesamtgewicht von Polypropylen und Harz, daß die Basisschicht einen E-Modul von wenigstens 3 000 N/mm$^2$ aufweist, gemessen in beiden Richtungen der molekularen Orientierung, und daß die Deckschicht, bzw. die Deckschichten, ein Polydialkylsiloxan in einer Menge von 0,3 bis 1,5 Gew.-%, bezogen auf das Gewicht der Deckschicht(en), enthält.

2. Folie nach Anspruch 1, dadurch gekennzeichnet, daß das Propylen der Basisschicht einen Schmelzflußindex im Bereich von 0,5 g/10 min bis 8 g/10 min, bevorzugt von 1,5 g/10 min bis 4 g/10 min, besitzt, gemessen nach DIN 53 735 bei 2,16 kg Belastung.

3. Folie nach Anspruch 1 oder 2, dadurch gekennzeichnet, daß das niedrigmolekulare Kohlenwasserstoffharz der Basisschicht einen Erweichungspunkt von 60 bis 180 °C, bevorzugt von 80 bis 130 °C, aufweist.

4. Folie nach einem der Ansprüche 1 bis 3, dadurch gekennzeichnet, daß die Harzmenge in der Basisschicht vorzugsweise im Bereich von 20 bis 30 Gew.-% liegt, bezogen auf das Gesamtgewicht der Mischung.

5. Folie nach einem der Ansprüche 1 bis 4, dadurch gekennzeichnet, daß der Elastizitätsmodul der Bassischicht im Bereich von 3 000 bis 4 500 N/mm$^2$ liegt.

6. Folie nach einem der Ansprüche 1 bis 5, dadurch gekennzeichnet, daß die Deckschicht(en) siegelfähig ist (sind).

7. Folie nach einem der Ansprüche 1 bis 5, dadurch gekennzeichnet, daß die Deckschicht(en) nicht siegelfähig ist (sind).

8. Folie nach einem der Ansprüche 1 bis 7, dadurch gekennzeichnet, daß das Polydialkylsiloxan der Deckschicht(en) 1 bis 4 Kohlenstoffatome in der Alkylgruppe und eine kinematische Viskosität von 1 000 bis 100 000 mm$^2$/s bei 25 °C, bevorzugt von 5 000 bis 50 000 mm$^2$/s, aufweist.

9. Folie nach einem der Ansprüche 1 bis 8, dadurch gekennzeichnet, daß sie eine Gesamtdicke von 15 bis 40 $\mu$m, bevorzugt von 20 bis 30 $\mu$m, aufweist.

10. Folie nach einem der Ansprüche 1 bis 9, dadurch gekennzeichnet, daß die Deckschicht(en) (jeweils) eine Schichtdicke von 0,2 bis 4 $\mu$m, bevorzugt von 0,5 bis 3 $\mu$m, aufweist (aufweisen).

## Claims

1. A transparent polypropylene film, produced by coextrusion and coated on one or both sides, for candy twist wrapping, wherein the polypropylene base layer additionally contains a low molecular hydrocarbon resin in an amount of 10 to 40% by weight, based on the total weight of polypropylene and resin, the base layer has a modulus of elasticity of not less than 3,000 N/mm$^2$, measured in both directions of molecular orientation, and the top layer or layers contains or contain a polydialkylsiloxane in an amount of 0.3 to 1.5% by weight, based on the weight of the top layer or layers.

2. The film as claimed in claim 1, wherein the polypropylene of the base layer has a melt flow index in the range from 0.5 g/10 min to 8 g/10 min, preferably from 1.5 g/10 min to 4 g/10 min, measured according to DIN 53,735 under 2.16 kg load.

3. The film as claimed in claim 1 or 2, wherein the low molecular hydrocarbon resin of the base layer has a softening point of 60 to 180 °C, preferably of 80 to 130 °C.

4. The film as claimed in any of claims 1 to 3, wherein the amount of resin in the base layer is preferably in the range from 20 to 30% by weight, based on the total weight of the mixture.

5. The film as claimed in any of claims 1 to 4, wherein the modulus of elasticity of the base layer is in the range from 3,000 to 4,500 N/mm$^2$.

6

6. The film as claimed in any of claims 1 to 5, wherein the top layer or layers is or are sealable.

7. The film as claimed in any of claims 1 to 5, wherein the top layer or layers is or are non-sealable.

8. The film as claimed in any of claims 1 to 7, wherein the polydialkylsiloxane of the top layer or layers has 1 to 4 carbon atoms in the alkyl group and has a kinematic viscosity of 1,000 to 100,000 mm²/sec at 25°C, preferably of 5,000 to 50,000 mm²/sec.

9. The film as claimed in any of claims 1 to 8, wherein the total thickness is from 15 to 40 $\mu$m, preferably from 20 to 30 $\mu$m.

10. The film as claimed in any of claims 1 to 9, wherein the top layer or layers has, or each have, a thickness of 0.2 to 4 $\mu$m, preferably of 0.5 to 3 $\mu$m.

**Revendications**

1. Feuille transparente en polypropylène, enduite sur une ou deux faces(s) et fabriquée par coextrusion, pour l'emballage par torsion de bonbons, caractérisée en ce que la couche de base en polypropylène renferme en outre une résine hydrocarbonée de faible masse moléculaire, à raison de 10 à 40 % en poids par rapport au poids total du polypropylène et de la résine, en ce que la couche de base a un module E d'au moins 3000 N/mm², mesuré dans les deux directions d'orientation moléculaire, et en ce que la ou les couche(s) de recouvrement renferme(nt) un polydialkylsiloxane, à raison de 0,3 a 1,5 % en poids par rapport au poids de la (des) couche(s) de recouvrement.

2. Feuille selon la revendication 1, caractérisée en ce que le polypropylène de la couche de base a un indice de fusion à chaud de l'ordre de 0,5 g/10 min à 8 g/10 min, de préférence de 1,5 g/10 min à 4 g/10 min, mesuré d'après DIN 53735 sous 2,16 kp de charge.

3. Feuille selon l'une des revendications 1 ou 2, caractérisée en ce que la résine hydrocarbonée de faible masse moléculaire de la couche de base présente un point de ramollissement de 60 à 180°C, de préférence de 80 à 130°C.

4. Feuille selon l'une des revendications 1 à 3, caractérisée en ce que la proportion de résine dans la couche de base est de préférence comprise entre 20 et 30 % en poids, par rapport au poids total du mélange.

5. Feuille selon l'une des revendications 1 à 4, caractérisée en ce que le module d'élasticité de la couche de base est compris entre 3000 et 4500 N/mm².

6. Feuille selon l'une des revendications 1 à 5, caractérisée en ce que la (les) couche(s) de recouvrement est (sont) scellable(s).

7. Feuille selon l'une des revendications 1 à 5, caractérisée en ce que la (les) couche(s) de recouvrement n'est (ne sont) pas scellable(s).

8. Feuille selon l'une des revendications 1 a 7, caractérisée en ce que le polydialkylsiloxane de la (des) couche(s) de recouvrement renferme de 1 à 4 atomes de carbone dans le groupe alkyle et présente une viscosité cinématique de 1000 à 100.000 mm²/s à 25°C, de préférence de 5000 à 50.000 mm²/s.

9. Feuille selon l'une des revendications 1 à 8, caractérisée en ce qu'elle présente une épaisseur totale de 15 à 40 $\mu$m, de préférence de 20 à 30 $\mu$m.

10. Feuille selon l'une des revendications 1 à 9, caractérisée en ce que la (les) couche(s) de recouvrement présente(nt) (chacune) une épaisseur de couche de 0,2 à 4 $\mu$m, de préférence de 0,5 à 3 $\mu$m.